Europäisches Patentamt

European Patent Office

Office européen des brevets

(11) Publication number: **0 414 303 A1**

# EUROPEAN PATENT APPLICATION

(21) Application number: **90202157.5**

(22) Date of filing: **09.08.90**

(51) Int. Cl.⁵: **C04B 18/10, A62D 3/00**

(30) Priority: **25.08.89 IT 2156089**

(43) Date of publication of application:
**27.02.91 Bulletin 91/09**

(84) Designated Contracting States:
**DE ES GR**

(71) Applicant: SNAMPROGETTI S.p.A.
Corso Venezia 16
I-20121 Milan(IT)

(72) Inventor: Bassetti, Angelo
Via Borgometauro 84
I-61032 Fano, Pesaro(IT)
Inventor: Placci, Claudio
Via Togliatti 12
I-61032 Fano, Pesaro(IT)
Inventor: Farneti, Angiolo
Via Acacie 10
I-61032 Fano, Pesaro(IT)
Inventor: Barbaresi, Ugo
Via Galilei 21
I-61034 Fossombrone, Pesaro(IT)

(74) Representative: Roggero, Sergio et al
Ing. Barzanò & Zanardo Milano S.p.A. Via
Borgonuovo 10
I-20121 Milano(IT)

(54) **Method for rendering toxic and harmful dust residues produced by thermal destruction processes inert.**

(57) A method for rendering toxic and harmful dust removed from the gaseous combustion products of waste incineration plants inert by enclosing said dust in concrete after making the sulphates contained in the dust insoluble by treatment with barium chloride.

# METHOD FOR RENDERING TOXIC AND HARMFUL DUST RESIDUES PRODUCED BY THERMAL DESTRUCTION PROCESSES INERT

Processes for the controlled combustion or thermal destruction of solid or liquid waste or purification sludge give rise to gaseous combustion products containing particulate and other pollutants. These components are collected and removed in suitable dry or wet purification equipment (such as electrostatic precipitators, bag filters or wet purifiers) before the gaseous combustion products are fed to atmosphere.

Such dust or sludge resulting from the purification of gaseous combustion products represents difficultly disposable waste. It can comprise high concentrations of toxic metals such as cadmium, copper, nickel, lead, mercury, arsenic or zinc. The concentration of such metals in the solids resulting from the gas purification is often such as to class them as toxic and harmful waste within the meaning of current laws.

Their disposal as such presents objective difficulties both because of the scarcity of suitable dumps (of second category type C and third category), and because of the definite possibility of their releasing toxic metals into the surrounding environment. An object of the method according to the present invention is to immobilize and render inert the residual toxic metals from controlled combustion and thermal destruction processes (contemplated in D.P.R. 915/1982) so that the eluate from the treated material falls within the limits of Table A of law No. 319/1976.

A further object of the present invention is to provide a final product which is solid and has such mechanical and impermeability characteristics as to ensure that it lasts with time.

It can be disposed of in dumps of second category type B, or better still type A, or be used as inert material in the preparation of concrete products for use in civil engineering. With the method according to the invention, even dust and sludge waste which besides containing a high toxic metal concentration is characterised by the presence of organo-chlorinated micropollutants and a high concentration of soluble chlorides and sulphates (these latter even exceeding 10% by weight of the waste as such) can be rendered inert and then used as inert material. The method is described hereinafter with reference to the outline flow diagram of the figrure which by way of non-limiting example illustrates a typical embodiment used in the preparation of concrete products for civil engineering use.

Dust from the gaseous combustion product purifiers is fed into the silo 1 after the necessary analysis to determine the required feed of the other components has been carried out.

A quantity of dust is withdrawn from the silo 1 and fed by gravity to the weighing station 2, where it is measured and then transferred to the mixer 3. This mixer is in practice a cement mixer of fixed type provided with a drive M and able to homogenize liquids and solids into a mix having the consistency of a normal cement mortar.

In the tank 4 a barium chloride solution is prepared, having a known concentration so as to allow correct quantity feed of this reagent. A quantity of chloride solution, measured by the flow meter FI, is withdrawn from the tank 4 such that the ratio of barium chloride to sulphates present in the dust fed to the mixer 3 is stoichiometric, and is fed to the mixer. The mixer is driven and the barium chloride reacts to precipitate the sulphates present.

This stage of the method is completed within a few minutes. A sulphate-resistant hydraulic binder such as a 425 ARS Portland cement is added to the mixture obtained from the latter stage. This binder is stored in the silo 5 and is measured by the same weighing station 2, after which it is fed to the mixer 3. The weight ratio of treated dust to hydraulic binder is between 1/1 and 5/1. According to a preferred embodiment of the invention a fluidifying additive is added to the mix to reduce the quantity of mix water and improve the mechanical characteristics of the product obtained. Suitable additives are for example naphthenesulphonates in a quantity of between 0.5% and 2% by weight with respect to the binder. This additive is withdrawn from the dispensing tank 6.

The mix is mixed for a few minutes until a homogeneous mortar is obtained. If the water quantity contained in the fed barium chloride solution is less than that required by the hydraulic binder, a further water quantity is fed from the dispensing tank 7.

If desired, the mix can be enriched with inerts by feeding sand or other inerts of suitable particle size distribution from the silo 8, particularly if the quantity of dust to be treated is insufficient for the products to be obtained. In this case the binder quantity can be adjusted to maintain the correct ratio of binder to inerts.

The mix obtained is then distributed by the belt conveyor 9, driven by the motor M, to the moulds 10 which are provided with vibration means to facilitate compaction and uniformity of the casting. The castings are left in the moulds for about 48 hours to allow them to set, after which the moulds can be dismantled and reused, while the castings are left to cure as in the case of a normal concrete. In the described case the shape and size of the product are determined by its subsequent use. The said products can also be provided with iron reinforcement of the same type as that used for normal concrete. If however the material produced is intended to be dumped rather than reused, the mortar obtained is cast into shapes and pieces which can be easily handled.

Once the characteristics of the dust to be treated are known and the feed rates to be maintained have been determined, the method according to the present invention is extremely simple and economical, requiring equipment and working procedures which are typical of a simple concrete production centre.

The method is based on the known capacity of hydraulic binders such as cement to securely immobilize, within the crystalline lattice of the aluminosilicates which form during setting, the metals and certain anions present in the dust which is added to the mix.

This immobilization capacity is however nullified if the dust has a significant content of certain metals and anions such as soluble sulphates. These chemical species negatively affect the setting and hardening processes of the hydraulic binder, to the extent of totally inhibiting them if the soluble sulphates exceed the threshold of about 3%. It is precisely this situation which frequently recurs in the case of dust originating from the particulate of thermal waste destruction plants.

The prior treatment with barium chloride in a quantity stoichiometric with respect to the sulphates is an important characteristic of the present invention, enabling this particulate matter to be rendered inert and reused, and which would otherwise give rise to various disposal problems.

This prior treatment makes the sulphates insoluble and of no influence on the setting and hardening of the mix.

The use of particular hydraulic binders of the aforesaid type prevents the formation of ettringites and the consequent dimensional instability of the final product and its degradation with time. Said compounds could form by solid-phase reaction between alumina and the sulphates to give rise to a very considerable volume increase (up to three times the original volume of the constituents), with consequent cracking and splitting of the piece. In this respect it should be noted that although the sulphates have been rendered insoluble they are still present in the mix.


EXAMPLE

The method of the invention has been implemented industrially in rendering inert the residual dust deriving from the removal of the particulate matter contained in the gaseous combustion products from the solid urban waste incineration plant of the town of Bolzano.

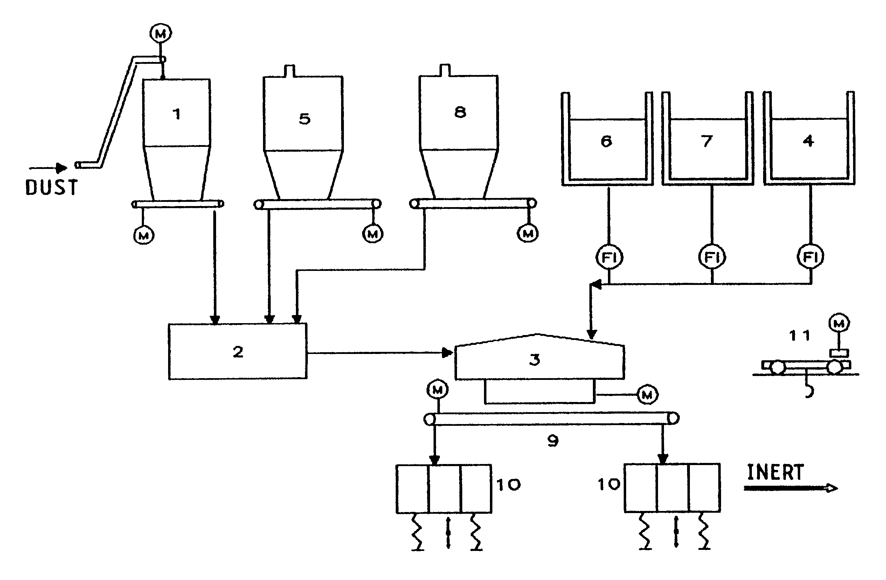

The daily dust quantity to be treated is 8400 kg, and the plant corresponds to the flow diagram of the figure.

Dust is fed in its natural state from the gas purification section of the waste incinerator to the silo 1 by a bucket elevator. The dust composition is analyzed periodically and the analyses show that its composition undergoes only slight variation with time, so that the reagent feed quantities do not require frequent adjustment.

During tests, the significant composition of the dust in its natural state was as follows:

| Sulphates | 10.1% by weight |
|---|---|
| Chlorides | 11.1% by weight |
| Aluminium | 40 g/kg |
| Iron | 11 g/kg |
| Manganese | 1 g/kg |
| Chromium (total) | 0.3 g/kg |
| Lead | 8 g/kg |
| Copper | 1 g/kg |
| Cadmium | 0.5 g/kg |
| Arsenic | traces |
| Mercury | traces |
| Selenium | traces |

The process is conducted batchwise. The useful mixer volume is about 500 litres. Each batch of natural dust withdrawn from the silo 1 is weighed out to 434 kg in the weighing station 2 and fed to the mixer 3. 163 litres of 30% w/w $BaCl_2.2H_2O$ solution are withdrawn from the tank 4 in which the chloride solution is prepared, as measured by its flow meter FI, and fed to the mixer 3. The mixer is then operated for about 4 minutes to effect the prior sulphate insolubilization treatment.

217 kg of 425 ARS Portland cement are withdrawn from the silo 5 by weighing in the weighing station 2, and then fed to the mixer 3 containing the mixture from the first treatment stage. The weight ratio of cement to dust is 0.5/1.

2.2 kg of a commercial naphthenesulphonate-based fluidifier known as REOBIL is then added to the mixture.

The mixer 3 is again operated for about 4 minutes to obtain a mix having the consistency of a normal cement mortar.

The mix is discharged by means of the motorized belt conveyor 9 and cast into moulds 10 provided with vibration systems to compact the casting and make it uniform. The product consists of 0.8 $m^3$ cubic blocks intended for the construction of embankments. The cast blocks are left in the moulds for about 48 hours to enable the hydraulic binder to set and the necessary mechanical strength to be attained for handling the product. The moulds are then opened and the blocks conveyed by the overhead travelling crane 11 to the curing area to attain final characteristics corresponding to those of normal concrete.

Test cubes having a 5 cm side dimension were also prepared from the obtained mix.

After curing for 28 days the test cubes have a compression strength of 105 $kg/cm^2$.

Elution tests were also conducted both on the dust as such and on the prepared test cubes.

The test procedure is that described as the 0.5 M acetic acid transfer test in "Quaderni Istituto Ricerca Acque" of January 1985, illustrating the IRSA-CNR method, to which current laws refer.

The eluate characteristics after the acetic acid transfer test are as follows:

|  | Dust | Test cube |
|---|---|---|
| Chromium (total) mg/l | 0.05 | < 0.01 |
| Lead mg/l | 16.9 | 0.2 |
| Copper mg/l | 1.7 | 0.05 |
| Cadmium mg/l | 24 | 0.02 |
| Arsenic mg/l | < 0.003 | < 0.001 |
| Mercury mg/l | < 0.005 | < 0.005 |
| Selenium | absent | absent |

The characteristics of the eluate deriving from the product test cubes therefore fall within current requirements, whereas the dust in its natural state demonstrates a considerable release of toxic metals during the transfer test.

The product blocks showed no dimensional instability or degradation with time.

## Claims

1. A method for rendering inert the toxic and harmful sludge and/or dust removed from the gaseous combustion products of plants for the controlled combustion and thermal destruction of waste, by immobilizing it within the crystalline lattices which form from the aluminosilicate hydrates of a hydraulic binder on setting and hardening, characterised by comprising the following steps:
   a) treating the dust as such with a barium chloride solution such that the quantity of barium chloride is in stoichiometric proportion to the quantity of sulphates present in the dust, thus rendering the soluble sulphates present in said dust substantially insoluble;
   b) adding a sulphate-resistant hydraulic binder to the mixture obtained from the preceding step such that the weight ratio of dust to binder lies between 1/1 and 5/1;
   c) mixing the resultant mixture from the preceding step until a homogeneous mortar forms;
   d) casting the obtained mortar into moulds, in which the hydraulic binder setting process takes place to finally form a solid which after curing possesses mechanical and permeability characteristics substantially equal to those of a normal concrete, and which encloses said dust in an immobilized and inert-rendered manner such that it is not released into the environment.

2. A method for treating toxic and harmful dust as claimed in the preceding claim, characterised in that the mortar obtained in step c) is used to form products for use in civil engineering by casting into moulds of the desired dimensions.

3. A method for treating toxic and harmful dust and/or sludge as claimed in one or more of the preceding claims, characterised in that a cement mortar fluidifying agent, preferably naphthenesulphonate-based, is added in a quantity of between 0.5% and 2% by weight to the mix formed from the dust and/or sludge, the barium chloride solution and the hydraulic binder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CHEMICAL ABSTRACTS, vol. 105, no. 26, December 1986, page 299, abstract no. 231526d, Columbus, Ohio, US; & JP-A-61 133 186 (M. WAKIMURA) 20-06-1986 | 1,2 | C 04 B 18/10 <br> A 62 D 3/00 |
| Y | FR-A-2 244 725  (H. JAKLIN) <br> * Page 3, lines 9-19 * | 1,2 | |
| A | US-A-4 188 231  (R.C. VALORE) <br> * Claims 1,9,11 * | 1,3 | |
| A | DE-C-9 363 18  (Th. FLEITMANN) | | |
| A | EP-A-0 115 306  (S. MATSUURA) <br> * Claims 1,2; page 6, lines 1-2 * | | |
| A | CHEMICAL ABSTRACTS, vol. 110, no. 11, 29th May 1989, page 341, abstract no. 198145g, Columbus, Ohio, US; I.M. GRUSHKO et al.: "Slag from refuse-incinerating plants for cement concretes", & STROIT. MATER. KONSTR. 1988, (3), 13 | | |
| A | CHEMICAL ABSTRACTS, vol. 96, 1982, page 420, abstract no. 129210e, Columbus, Ohio, US; & JP-A-81 161 881 (EBARA-INFILCO CO., LTD) 12-12-1981 | | TECHNICAL FIELDS SEARCHED (Int. Cl.5) <br><br> C 04 B 18 <br> A 62 D 3 |
| A | CHEMICAL ABSTRACTS, vol. 90, 1979, page 277, abstract no. 92023u, Columbus Ohio, US; & JP-A-78 135 883 (NICHIREKI CHEMICAL INDUSTRY CO. LTD) 27-11-1978 | | |
| A | CHEMICAL ABSTRACTS, vol. 97, 1982, page 380, abstract no. 78353q, Columbus, Ohio, US; & SC-A-195 844 (V. RUML et al.) 15-06-1982 | | |

The present search report has been drawn up for all claims

| Place of search | Date of completion of search | Examiner |
|---|---|---|
| The Hague | 30 October 90 | DAELEMAN P.C.A. |